# EUROPEAN PATENT SPECIFICATION

(11) **EP 1 839 487 B1**
(45) Date of publication and mention of the grant of the patent: **11.04.2012**
(21) Application number: 05816918.6
(22) Date of filing: 16.12.2005
(51) Int. Cl.: A21D 2/26, A21D 2/36, A21D 13/00, A23D 7/00, A23J 3/16, A21D 8/04

(54) **BREAD-IMPROVING AGENT AND BREAD PRODUCTS USING THE SAME**
BROTVERBESSERUNGSMITTEL UND DAMIT HERGESTELLTE BROTPRODUKTE
AGENT D'AMELIORATION DE PANIFICATION ET PRODUITS PANIFIES L'UTILISANT

(30) Priority: 17.12.2004 JP 2004366085; 02.08.2005 JP 2005223724
(43) Date of publication of application: 03.10.2007
(73) Proprietor: Fuji Oil Company, Ltd., Osaka-shi, Osaka 542-0086 (JP)
(72) Inventor: YOKOYAMA, Hitoshi, c/o Fuji Oil Company, Limited, Izumisano-shi, Osaka 5988540 (JP); KOSEKI, Takaya, c/o Fuji Oil Company, Limited, Izumisano-shi, Osaka 5988540 (JP)
(74) Representative: Hayes, Adrian Chetwynd
(86) International application number: PCT/JP2005/023147
(87) International publication number: WO 2006/064910

(56) References cited:
- EP-A1- 1 010 753
- WO-A1-01/11974
- JP-A- 10 130 160
- JP-A- 10 234 290
- JP-A- 11 018 714
- JP-A- 11 113 513
- JP-A- 63 317 055
- JP-A- 2001 299 194
- JP-A- 2002 272 357
- JP-A- 2004 154 122

## Description

### Technical Field

The present invention relates to a bread-improving agent and bread products using the same.

### Background Art

In general, bread products are produced by kneading wheat flour, leaven, salt, sugar, fat or oil, yeast food, etc. as raw materials, fermenting the resulting mixture, and subjecting the mixture to mechanical operations such as dividing and molding, followed by baking. Such bread products contain nutrients such as carbohydrate, protein, vitamins and minerals and, from a viewpoint of a moisture content and a pH value, fungi are liable to be grown on or in the bread products. Since fungi remarkably deteriorate a commercial value of bread products, the number of days until fungi are generated is also taken into consideration in the determination of a consumption limit of bread products.

Nowadays, in distribution markets such as convenience stores and supermarkets, there is a general tendency that the business is continued for 24 hours or 365 days and, from a viewpoint of commodity control, extension of a consumption limit even only by one day is very meaningful. And, another important element is how long quality immediately after production such as physical properties and taste of bread products is maintained within a consumption limit.

Conventionally, for the purpose of inhibiting generation of fungi in bread products, methods including addition of acidulants such as acetic acid and sodium acetate, preservatives such as propionic acid, and emulsifiers such as glycerin fatty acid esters have been known. However, in these methods, there is a problem that a taste of bread products is deteriorated. In addition, also from a viewpoint of recent enhanced health inclination of consumers, a technique of inhibiting generation of fungi by using a natural material in place of these additives is strongly desired.

For example, Patent Document 1 proposes a process for producing bread having an antifungal effect by preparing bread dough containing both of a lactic acid bacterium and yeast excellent in the production of carbonic acid gas, followed by producing bread from the bread dough. However, the effect of improving physical properties of bread of this process is unknown, while it is possible to give an antifungal effect and a better taster to bread products. Further, when bakers to apply this process to currently producing bread, it becomes necessary to switch currently using leaven to different leaven composed of such a lactic acid bacterium and yeast. Each leaven is different in fermenting activity and glucose tolerance and, in order to switch leaven, it becomes necessary to change production conditions such as floor conditions and proofing conditions.

On the other hand, the present applicant has also disclosed a bread-improving agent mainly containing a soybean protein solution which has been fermented with a lactic acid bacterium (Patent Document 2), and this improving agent exerts the effect of softening an eating feeling of bread products, and preventing retrogradation to preserve a soft eating feeling for a long period of time, the taste improving effect, the antibacterial effect and the like. However, although this improving agent has the effect of inhibiting proliferation of bacteria, there is still a room that the effect of inhibiting proliferation of fungi is improved.

Patent Document 3 is directed at an improver for lipid metabolism in humans and at foods or medicines containing said improver. The improver of Patent Document 3 comprises soybean milk fermented with a bacterium of the genus *Bifidobacterium.* Patent Document 3 teaches that certain compositions based on fermented soybean milk can be used for preventing arteriosclerosis.

Patent Document 4 is directed at a bean curd product and at foods or beverages containing said product. The product of Patent Document 4 is bean curd refuse which has been fermented with a lactic acid bacterium in the presence of a cell wall decomposing enzyme. Patent Document 4 teaches that such fermentation of bean curd refuse preserves the bean curd product itself.

Patent Document 5 is directed a substance with is obtained when brown rice optionally mixed with soybeans is first treated with a specific enzyme and then fermented with a lactic acid bacterium. Patent Document 5 teaches that resulting substance can be used for maintaining and promoting health in humans.

### (Reference Literature)

Patent Document 1: JP 2004-81212 A
Patent Document 2: JP 2001-299194 A
Patent Document 3: JP 10-130160 A
Patent Document 4: JP 2004-154122 A
Patent Document 5: JP 11-113513 A

### Disclosure of the Invention

### Problems to be solved by the invention

An object of the present invention is to provide a bread-improving agent which is excellent in antifungal properties with having effects of improving physical properties and a taste of bread products.

### Means for solving the problems

As to the above problem, the present inventors have studied intensively a relationship between preservation properties of bread products and microorganisms such as lactic acid bacteria and, as a result, have found that, when a fermented soybean protein material treated not with a lactic acid bacterium which has conventionally been used in the bread production but with a microorganism belonging to the genus *Bifidobacterium* which is a microbiologically different line from that of a lactic acid bacterium is prepared and used in bread products, the material shows not only the effect of inhibiting growth of bacteria but also the effect of remarkably inhibiting growth of fungi which seriously affect the bread qualities. The present inventors have further found that this fermented soybean protein material has effects of imparting excellent physical properties and a taste to bread products in addition to the function as a fungal growth inhibitor. Thus, the present invention has been completed.

That is, the present invention relates to:
1. Use of a bread-improving agent for inhibiting fungal growth in bread, said bread-improver comprising a fermented soybean protein material obtained by fermenting a soybean protein material selected from a group consisting of soybean milk, soybean slurry, soybean protein isolate, soybean protein concentrate and soybean flour with a microorganism belonging to the genus *Bifidobacterium* only, or a mixture thereof with lactic acid bacterium or bacteria, wherein a weight ratio of acetic acid content/lactic acid content in the ferment soybean protein material is not less than 1.
2. Use according to claim 1, wherein the weight ratio of acetic acid content/lactic acid content in the fermented soybean protein material is not less than 1.2.
3. Use according to claim 1 or 2, wherein acetic acid concentration in the fermented soybean protein material is 1 to 20% by weight in the solid content, and lactic acid concentration in the fermented soybean protein material is 1 to 15% by weight in the solid content.
4. Use according to claim 1 or 2, wherein acetic acid concentration is the fermented soybean protein material is 3 to 15% by weight in the solid content, and lactic acid concentration in the fermented soybean protein material is 1 to 10% by weight in the solid content.
5. Use according to claim 1, wherein a soybean solid content in the fermented soybean protein material obtained by fermentation with a microorganism belonging to the genus *Bifidobacterium* is 2 to 15%.
6. Use of a fat or oil emulsified composition for inhibiting fungal growth on bread, said composition comprising the bread-improving agent according to claim 1.
7. Use according to claim 6, wherein the composition is a water in oil-type or an oil in water-type.

### Effect of the Invention

By blending the bread-improving agent of the present invention into bread products, it becomes possible to impart a very good taste and physical properties to bread products and, as well as, the highly excellent preservative effect of delaying generation of fungi for bread products can be imparted. Therefore, only by adding the bread-improving agent of the present invention which is obtained from a natural material, bread products excellent in a taste and physical properties and highly excellent in the preservative property can be produced without using a large amount of other physical property improving agents and preservatives.

### Best Mode for Carrying Out the Invention

The present invention will be specifically explained below.

### (Bread products)

In the present invention, bread products refer to those obtained by using cereal flour such as wheat flour, rice flour, etc. as a main raw material and, if necessary, adding thereto other raw materials such as water, fat or oil, sugar, starch, seasoning, egg, a milk product, yeast food, enzyme, emulsifier, and a flavor, and preparing dough via a kneading step regardless of the presence or the absence of addition of leaven, and heating the dough by baking or steaming. Examples of the bread products widely include not only bread products obtained by fermentation with leaven, such as loaf bread, sweet bun, special bread (grissini, muffin, rusk, etc.), table roll, cooked bread, danish pastry, pizza, pita pan, nan, and the like, but also bread products obtained without fermentation, such as steamed bread, paotzu, chapatti, puri, hot cake, waffle, steamed cake, sponge cake, pie, crepe, sweet beans paste bun, and the like. Examples of the bread production method used in the present invention include those generally used methods such as a sponge-and-dough method, a straight-dough method, a frozen dough method, and a refrigerated dough method, and the like.

### (Bread-improving agent)

The bread-improving agent of the present invention is characterized in that it contains a fermented soybean protein material obtained by fermenting a soybean protein material with a microorganism belonging to the genus *Bifidobacterium* (hereinafter, abbreviated as "bifidobacterium" in some cases). A fermented soybean protein material alone or a mixture thereof with other existing food raw materials and a quality improving agent can be provided as a product.

### (Soybean protein material)

The soybean protein material which is a raw material for the bread-improving agent of the present invention may be any material as far as it is prepared from soybeans containing at least soybean protein. Suitable examples thereof include soybean milk (regardless of whole or defatted), soybean slurry obtained by pulverizing soybeans by grinding or cutting in an aqueous system, soybean protein isolate, soybean protein concentrate, soybean flour (regardless of whole or defatted), and the like.

Particularly, soybean milk and soybean flour are preferable because they are rich in nutrients such as oligosaccharides necessary for fermentation in addition to protein. Soybean milk is not particularly limited and includes whole soybean milk, defatted soybean milk or a mixture thereof, but from a viewpoint of giving a bland taste due to an oily component, whole soybean milk is preferable. As soybean milk, that obtained by a known method can be generally used. Examples of the known method include a method of soaking soybeans in water, warm water or hot water, grinding soaked soybeans and, if necessary, heating the resultant, followed by separation or without separation of soy pulp ("okara"), a method of extracting soybean flour used as a raw material with water, and the like, and the method is not particularly limited. It is further suitable to use soybean milk obtained by pulverizing swollen soybeans with applying a rotary blade-type shearing force into finely divided particles having average particle diameter of 20 to 100 micron, and separating soybean milk by a conventional method such as centrifugation, filtration, and the like, because soybean milk having a better taste without no odor is obtained. In this case, even when soybean milk is used without removing "okara", there is no problem of an eating feeling because a particle size is small. The defatted soybean milk is obtained by a similar treatment using defatted soybeans as a raw material. The soybean protein material can be subjected to fermentation in a solution or dispersion state.

The protein in the soybean protein material may be hydrolyzed with a protease. However, as a hydrolysis degree is increased, the formation of bread dough tends to be suppressed, and an amount of the improving agent to be blended into bread products must be reduced. Therefore, a hydrolysis degree of the protein in the soybean protein material is preferably 25% or less, more preferably 20% or less, in terms of a 15% trichloroacetic acid solubility (TCA solubility).

Alternatively, the soybean protein material can be formulated into a mixed solution or an emulsion composed of an aqueous phase and an oily phase prepared by mixing a solution containing the soybean protein material and fat or oil at an appropriate ratio and, if necessary, homogenizing the mixture. In this case, as the fat or oil, known fats or oils such as those derived from animals or vegetables, and processed fats or oils thereof can be used. Examples thereof include beef tallow, lard, soybean oil, cottonseed oil, rice oil, corn oil, coconut oil, palm oil, cacao butter, and the like, and their processed products such as hydrogenated, fractionated and interesterified products. They can be used alone, or by mixing them.

Alternatively, the soybean protein material can be formulated into a composite material prepared by adding an emulsifier such as monoglyceride, organic acid monoglyceride, diglycerin fatty acid ester, sorbitan fatty acid ester, sugar fatty acid ester, polyglycerin fatty acid ester, propylene glycol fatty acid ester, lecithin, and the like, while warming a solution containing the soybean protein material, and mixing and homogenize the resulting mixture.

Although the effect slightly varies depending on an amount of the bread-improving agent to be added to bread dough, suitably, a ratio of a soybean solid content of the soybean protein material used in the bread-improving agent of the present invention is 2 to 15% by weight, preferably 4 to 12% by weight. Regarding the sustaining effect of an eating feeling, particularly softness of bread, since free water in bread is fixed and becomes difficult to move due to strong water retention characteristics of soybean protein contained in the soybean solid matter, it is considered that retrogradation of starch is inhibited. When the soybean solid content is less than 2% by weight, since soybean protein effective for preventing retrogradation is too small, the effect is reduced. On the other hand, when the soybean solid content exceeds 15% by weight, soybean protein is too much, and this inhibits formation of gluten network, and a volume of bread is reduced, resulting in hard bread.

### (Fermented soybean protein material)

The bread-improving agent of the present invention contains a fermented soybean protein material obtained by fermenting the soybean protein material with bifidobacterium.

Fermentation may be performed by mixing bifidobacterium with lactic acid bacterium (bacteria). In this case, it is preferable that bifidobacterium has become predominant relative to the lactic acid bacterium (bacteria) in the fermented soybean protein material after completion of the fermentation. Whether bifidobacterium has become predominant or not can be determined by measuring the number of bacteria in the material after fermentation and determining whether the number of bifidobacteria is more than that of lactic acid bacteria. When sterilization is performed after fermentation, although the number of bacteria cannot be measured, determination can be done by measuring an acetic acid content in the fermented soybean protein material. That is, if a weight ratio of acetic acid content/lactic acid content in the fermented soybean protein material is not less than 1, more preferably not less than 1.2, it can be said that bifidobacterium is predominant relative to lactic acid bacterium (bacteria).

The resulting fermented soybean protein material has a pH of preferably 3.5 to 5.4, more preferably 3.7 to 5.0. In addition, acetic acid concentration is preferably 1 to 20% by weight, more preferably 3 to 15% by weight in the solid content. Lactic acid concentration is preferably 1 to 15% by weight, more preferably 1 to 10% by weight in the solid content.

### (Fermentation method)

The fermentation method is not particularly limited, but for example, after a bifidobacterium starter is seeded on the soybean protein material or a mixture containing such material, the resulting mixture is cultured at a temperature for a period of time suitable for the strain and, if necessary, conditions such as anaerobic conditions, etc. in an atmosphere is appropriately determined and then, fermentation can be performed.

When bifidobacterium used is hardly grown in the presence of oxygen, fermentation can be performed in the presence of an inert gas such as nitrogen. A degree of fermentation is desirably in terms of pH of approximately not higher than 5.4.

Fermentation may be mixing fermentation in which a plurality of bacterial strains are combined, or continuous fermentation in which a plurality of bacterial strains are combined.

Upon fermentation, nutrients necessary for proliferation of a microorganism such as sugars used in foods such as sucrose, glucose, fructose and inverted sugar, a meat extract, peptone, a yeast extract, peptide and the like may be added to the soybean protein material in advance.

Further, in order to adjust pH to optimal pH for a microorganism to be used, an acid used in foods such as citric acid, malic acid, and lactic acid may be added to soybean milk in advance.

Furthermore, when the fermented soybean protein material is distributed in the form of a liquid, a stabilizer such as water-soluble soybean protein polysaccharide, pectin, CMC and the like may be added in advance in order to stabilize soybean protein under acidic conditions.

### (Microorganism belonging to genus Bifidobacterium)

The microorganism belonging to the genus *Bifidobacterium* which acts on the soybean protein material is not particularly limited, and examples thereof include
*Bifidobacterium bifidum, Bifidobacterium longum, Bifidobacterium infantis, Bifidobacterium breve, Bifidobacterium adolesentis, Bifidobacterium angulatum, Bifidobacterium catenulatum, Bifidobacterium pseudocatenulatum, Bifidobacterium dentium, Bifidobacterium globosum, Bifidobacterium pseudolongum, Bifidobacterium cuniculi, Bifidobacterium choerium, Bifidobacterium animalis, Bifidoba cterium thermophilum, Bifidoba cterium boum, Bifidobacterium magunum, Bifidobacterium asteroides, Bifidobacterium indicum, Bifidobacterium gallicum, Bifidobacterium lactis, Bifidobacterium inopinatum, Bifidobacterium denticolens, Bifidobacterium pullorum, Bifidobacterium suis, Bifidobacterium gallinarum, Bifidobacterium ruminantium, Bifidobacterium merycicum, Bifidobacterium saeculare, Bifidobacterium minimum, Bifidobacterium subtile, Bifidobacterium coryneforme,* and the like. They can be used alone, or in combination thereof.

### (Sterilization)

For stabilizing quality, it is preferable that the bread-improving agent of the present invention is sterilized at addition to bread dough after fermentation with bifidobacterium. The sterilization means is not particularly limited, but heat sterilization is suitable for productivity. When bifidibacterium is alive, since fermentation with bifidobacterium proceeds too much at the time of fermentation of bread dough. Thus, acidity is easily elevated, and elevation in acidity lowers pH of bread dough too much, gluten is soften too much, which results in deterioration of workability.

In such a case, caving (state where a side of bread is depressed) is generated in bread after baking, and bread becomes softened, leading to reduction in an eating feeling. When the bread-improving agent is sterilized, bifidobacterium is not grown at the time of fermentation of bread dough, and the action on the bread dough is stabilized.

The heat sterilization includes low temperature pasteurization at approximately 70°C or higher, and high temperature sterilization at 100°C or higher, and an indirect sterilization manner utilizing a plate heat exchanger, a direct sterilization manner of direct injection of steam, or a container-filled pressure heat sterilization manner can be adopted.

The bread-improving agent of the present invention can be in the form of any of a liquid type, a concentrated type and a dried powder type after fermentation.

The bread products of the present invention comprise the aforementioned bread-improving agent. The pH of the bread-improving agent varies depending on a kind of bifidobacterium used in the fermented soybean protein material, a particular combination in case of combining a plural kinds of the bacteria, and a degree of fermentation, but is usually 3.7 to 5.4, preferably 4.0 to 5.0.

The bread products obtained by adding the fermented soybean protein material of the present invention as a raw material to bread dough exhibit a soft eating feeling and a better taste. At the same time, a particularly remarkable effect of delaying generation of not only bacteria but also fungi can be realized. Therefore, they can be stored for a long period of time. For example, when conventional loaf bread is preserved at a normal temperature, growth of fungi begins to be observed approximately four days after production. In the bread products containing the fermented soybean protein material of the present invention, although growth of fungi is also observed, it is five days or more after production, and a consumption limit can be extended for a long period of time.

The addition of the bread-improving agent of the present invention to bread dough can be performed, for example, by directly mixing the agent with other raw materials, or by adding the bread-improving agent to a fat or oil emulsion composition composed of an aqueous phase and an oily phase in advance, and mixing the composition with bread dough.

In the latter case, the bread-improving agent can be added to any of an aqueous phase and an oily phase. The fat or oil emulsion composition can be formulated into a water in oil-type fat or oil emulsion composition such as a margarine and a spread, or can be formulated into an oil in water-type fat or oil emulsion composition such as a cream and a filling. And, this fat or oil emulsion composition can be provided as the bread-improving agent of the present invention. A ratio of an oily phase may be appropriately determined depending on selection of a water in oil-type or an oil in water-type, an amount of the bread-improving agent to be added, and the like. Usually, it is 30 to 90 % by weight in case of a water in oil-type, and 5 to 60% by weight in case of an oil in water-type.

The amount of the bread-improving agent to be added to bread dough is not particularly limited, but from a viewpoint of the effect on antibacterial property and antifungal property, the amount is 3 to 35 parts by weight, preferably 5 to 25 parts by weight based on 100 parts by weight of wheat flour in the bread dough. When the amount to be added is too small, the effect of providing a soft feeling and delaying retrogradation, and the effect of improving preservative property are hardly exerted and, when the amount to be added is too large, gluten is softened too much with the acid which has been produced by the fermentation and contained in the bread-improving agent, which results in softening of bread.

Examples of the cereal flour to be used in bread dough for the production of bread include conventional flour such as wheat flour, whole grain flour, rice flour, and the like. The wheat flour does not limit a kind of strong flour or medium-strength flour. For producing the bread products, a conventional method can be used, and the bread products can be produced by blending the bread-improving agent into bread dough by the aforementioned method, and heating the blend by baking, steaming or frying with or without fermentation expansion. Bread dough can be obtained by a conventional method such as adding raw materials, for example, leaven, salt and water to the present bread-improving agent and cereal flour for bread production. Alternatively dough can be obtained by adding salt, water, a yeast food and, if necessary, other raw materials such as fat or oil (shortening, lard, margarine, butter, liquid oil, etc.), emulsifier, milk product, sugar, seasoning (glutamic acids, nucleic acid, etc.), chemical baking powder, flavor, and the like and kneading the resulting mixture. The dough thus obtained is baked, if necessary, via a fermentation step to obtain the bread products.

Hereinafter, Examples will be described, but the technical idea of the present invention is not limited to these Examples. Unless otherwise stated, "percents" and "parts" are by weight.

### Examples

### (Production Example 1)-Bread-improving agent containing bifidobacterium-fermented soybean milk as raw material-

As a soybean protein material, whole soybean milk "non-adjusted soybean milk" (solid content 9%, crude protein content 4.5%, manufactured by Fuji Oil Company Limited) was used. This was sterilized by heating at 142°C for 5 seconds, and cooled to 30°C. To 80 parts of this soybean milk were added 1 part of a culture of *Bifidobacterium longum* (lyophilized strain) as a starter, 2 parts of sugar, 0.8 parts of water-soluble soybean polysaccharide "SOYAFIBE" (manufactured by Fuji Oil Company Limited) and 0.1 parts of soybean peptide "HINUTE" (manufactured by Fuji Oil Company Limited), and water was added to the resulting mixture to give a total amount of 100 parts. Fermentation was performed in a tank at 37°C until pH became 4.4. The tank was filled with nitrogen to maintain anaerobic conditions during fermentation. The fermentation time was about 24 hours. Then, the tank was cooled to 7°C with a plate heat exchanger to obtain a fermented soybean protein material. This was homogenized under pressure of 10 MPa, and sterilize by heating at 90°C for 2 seconds to obtain "bread-improving agent A" (soybean solid content 7.2% by weight).

### (Example 1)-Bread products with improving agent A blended therein-

The bread-improving agent A obtained in Production Example 1 was added, and loaf bread was made by a 70% sponge-and-dough method in an about 5kg scale according to the formulation of Table 1 and the working steps of Table 2. As wheat flour, strong flour "EAGLE" (manufactured by Nippon Flour Mills Co., Ltd.) was used. As leaven, raw yeast "ORIENTAL YEAST" (manufactured by Oriental Yeast Co., Ltd.) was used. As fat or oil, shortening "PANPUS PURELE" (manufactured by Fuji Oil Co., Ltd.) was used.

The thus baked loaf bread was allowed to stand at room temperature (10 to 20°C) overnight under a hygienic environment, sliced into about 2 cm thick, and packed into a bag hygienically. The bag was sealed, and stored at 30°C for 10 days. A taste and an eating feeling of the loaf bread were assessed, and a degree of retrogradation was assessed every day and, at the same time, the state of generation of fungi was observed, and the number of bacteria was measured to confirm the preservative property. A volume of the loaf bread was measured by a rapeseed substitution method after baking and allowing to stand at room temperature overnight.

As a result, the loaf bread with the "bread-improving agent A" of Production Example 1 blended therein had a very good eating feeling such as cutting with teeth, softness and better melting in mouth, and exhibited a better taste. In addition, the loaf bread was excellent in a volume and a retrogradation preventing effect, and was also excellent in the antibacterial effect and the antifungal effect (Table 3).

**(Table 1) Table of loaf bread formulation**

| Raw material | Blending amount |
|---|---|
| (sponge-and-dough) | |
| Strong flour | 70 |
| Raw yeast | 2.5 |
| Water | 40 |
| (Regular kneading) | |
| Strong flour | 30 |
| High-quality white sugar | 6 |
| Salt | 2 |
| Skim milk | 2 |
| Shortening | 6 |
| Bread-improving agent | 20 |
| Water | 8 |

| | |
|---|---|
| Numerical value is "Bakers %" (Whole wheat flour is expressed by 100) | |

**(Table 2) Working steps**

| (sponge-and-dough) | |
|---|---|
| Mixing | Low rate 3 min → medium rate 1 min |
| Kneading temperature | 24°C |
| Sponge-and-dough fermentation time | 3 hours |
| Fermentation chamber | 28°C (Humidity 75%) |
| Fermentation completion temperature | 29°C |
| (Regular kneading) | |
| Mixing | Low rate 3 min → medium rate 3 min |
| After addition of fat or oil | Low rate 2 min → medium rate |
| | 4 min → low rate 1 min |
| Kneading temperature | 27°C |
| Floor time | 30 min |
| Fermentation chamber | 27°C (Humidity 75%) |
| Fermentation completion temperature | 29°C |
| Division weight | 220 g |
| Bench time | 20 min |
| Proof time | 45 min |
| Proofing | 38°C (Humidity 85%) |
| Baking | Upper flame 215°C Lower flame 235°C 40 min |

| | |
|---|---|
| (Production Example 2, Example 2)-Bread-improving agent containing Bifidobacterium-fermented soybean protein isolate as raw material- | |

According to the same manner as that of Production Example 1 except that a 10 % dispersion of soybean protein isolate "PROLINA 250" (solid matter 95%, crude protein content 95%, manufactured by Fuji Oil Company Limited) was used as a soybean protein material in place of whole soybean milk, a bread-improving agent B was obtained, and according to the same manner as that of Example 1, loaf bread was obtained.

The results are shown in Table 3. As with the loaf bread of Example 1, the loaf bread obtained had a very good eating feeling, and was excellent in the antibacterial effect and the antifungal effect. Regarding a taste and a volume of bread, the loaf bread of Example 1 had a slightly better assessment. Therefore, soybean milk was better than soybean protein isolate as the soybean protein material.

### (Comparative Example 1)-Bread products with no bread-improving agent added-

According to the same manner as that of Example 1 except that the bread-improving agent was 0%, and water was 26% in (regular kneading) formulation in Table 1, loaf bread with no bread-improving agent added was obtained. Assessment of this loaf bread was inferior in all items as compared with Examples 1 and 2 (Table 3).

### (Reference Example 1)-Bread-improving agent containing lactic acid bacterium-fermented soybean milk as raw material-

According to the same manner as that of Example 1 except that the microorganism acting on whole soybean milk was replaced with a lactic acid bacterium (each one part of individual cultures of commercially available lactic acid bacteria (lyophilized strains) of *Lactobacillus acidophilus, Lactobacillus bulgaricus,* and *Streptococcus thermophilus* was added as a starter), a bread-improving agent C was obtained.

Then, this improving agent C was used to make loaf bread as in Example 1.

This loaf bread was excellent in a taste, a volume of loaf bread, retrogradation prevention, and the antibacterial effect. Regarding the antifungal effect, the remarkable effect as in Examples 1 and 2 was not seen, and generation of fungi was slightly delayed as compared with the conventional loaf bread of Comparative Example 1. Further, while an eating feeling was very good in softness and melting in mouth like Examples 1 and 2, cutting with teeth in Examples 1 and 2 was more excellent than that of this Example (Table 3).

### (Comparative Example 2)-Bread products with sodium acetate preparation added-

According to the same manner as that of Example 1 except that 0.4% of a synthetic preservative, i.e., a commercially available sodium acetate preparation (containing 75% sodium acetate) was blended in the formulation of Comparative Example 1 wherein the bread-improving agent was not added, loaf bread was made. While this loaf bread was excellent in the antibacterial effect and the antifungal effect, an eating feeling was not good, and a taste and a sour taste were not good either (Table 3).

Quality (eating feeling, taste, volume) upon production, and quality (eating feeling, taste, retrogradation prevention, antibacterial, antifungal) after production of loaf bread obtained in Examples 1 and 2, Reference Example 1 and Comparative Examples 1 and 2 are summarized in the following Table 3.

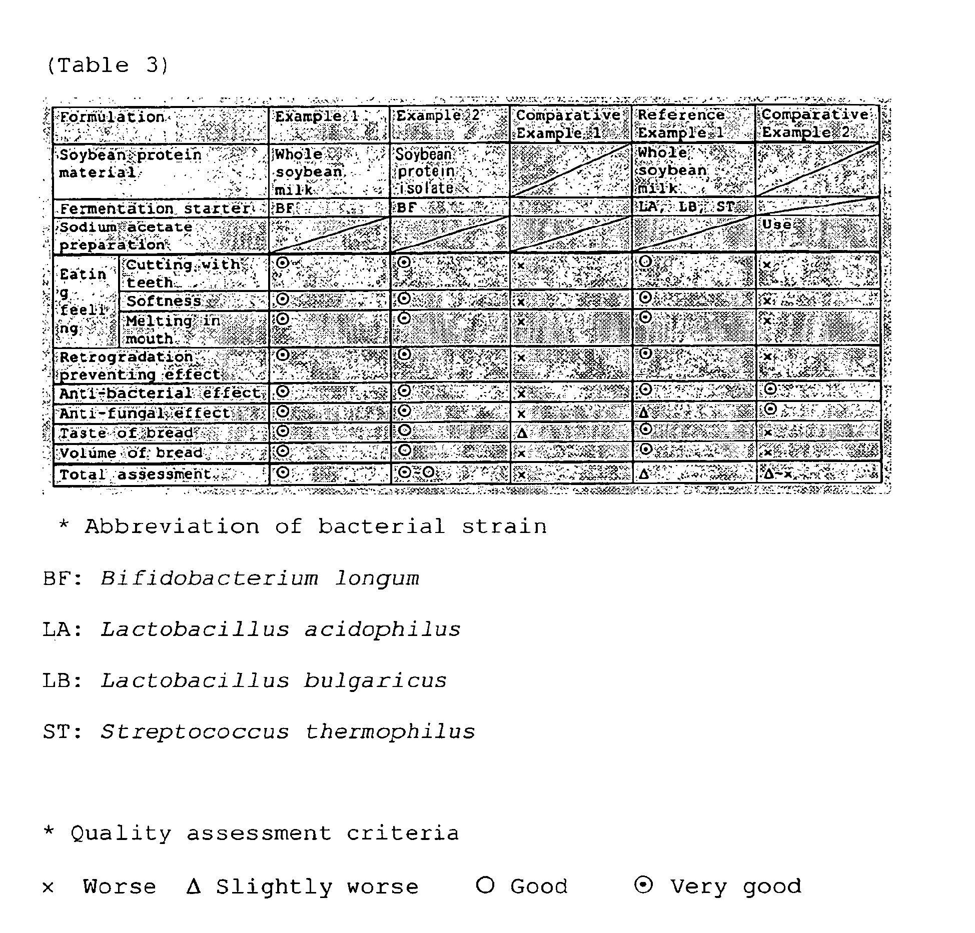

### (Production Example 3)

According to the same manner as that of Production Example 1 except that whole soybean flour (solid content 90%, crude protein content 41%) was used as a soybean protein material in place of whole soybean milk, an amount of water to be blended was adjusted so that a content of crude protein became the same as the content of whole soybean milk of Example 1, and the resulting mixture was homogenized with a homogenizer upon formulation, a bread-improving agent D was obtained.

The pH, acetic acid concentration, lactic acid concentration of a fermented solution after 20 hours from the initiation of fermentation are shown in Table 4 in comparison with the bread-improving agent A obtained in Production Example 1.

**(Table 4)**

| | Bread-improving agent A (Production Example 1) | Bread-improving agent D (Production Example 3) |
|---|---|---|
| Solid content | 10.1% | 11.2% |
| pH | 4.4 | 4.3 |
| Acetic acid concentration | 0.42% | 0.42% |
| Lactic acid concentration | 0.20% | 0.35% |
| Acetic acid/lactic acid ratio | 2.1 | 1.2 |

In both of bread-improving agents A and D, acetic acid concentration was higher as compared with lactic acid concentration, and acetic acid concentrations were similar to each other. In the improving-agent D, lactic acid was produced in a larger amount, and total acid concentration was also higher. From this, it was suggested that the fermented soybean protein material using whole soybean flour was also excellent in the antibacterial and antifungal effect like the fermented soybean protein material using whole soybean milk, and the effect was rather higher.

### (Production Example 4)-Water in oil-type fat or oil emulsion composition with improving agent A-

An aqueous phase obtained by mixing 30 parts by weight of the improving agent A obtained in Production Example 1 and 2 parts of salt was gradually added to an oily phase composed of 70 parts of soybean hydrogenated oil (melting point 30°C), and the mixture was pre-emulsified. The emulsified mixture was heated to sterilize at 80°C for 10 minutes, and was plasticized by rapidly cooling to 40°C with a combinator to prepare a water in oil-type fat or oil emulsion composition.

### (Example 5)-Bread products using water in oil-type fat or oil emulsion composition with improving agent A-

Using the water in oil-type fat or oil emulsion composition obtained in Production Example 4, "Briosh" bread was made by a straight method in an about 5kg scale according to the formulation of Table 5 and working steps of Table 6. As wheat flour, strong flour "EAGLE" (manufactured by Nippon Flour Mills Co., Ltd.) and France flour "LYSD'OL" (manufactured by Nisshin Flour Milling Co., Ltd.) were used. As leaven, raw yeast "ORIENTAL YEAST" (manufactured by Oriental Yeast Co., Ltd.) was used.

The baked Briosh was allowed to cool to room temperature (10 to 20°C) in a hygienic environment and packed into a bag hygienically, and the bag was sealed, and stored at 30°C for 10 days. A taste and an eating feeling of Briosh were assessed, and a degree of retrogradation was assessed every day and, at the same time, the state of generation of fungi was observed, and the number of bacteria was measured to confirm the preservative property.

**(Table 5) Table of Briosh formulation**

| Raw material | Blending amount |
|---|---|
| Strong flour | 70 |
| France flour | 30 |
| Raw yeast | 4.5 |
| High quality white sugar | 16 |
| Salt | 1.8 |
| Whole egg (neat) | 40 |
| Skim milk | 2 |
| Water in oil-type fat or oil emulsion composition | 50 |
| Water | 28 |

| | |
|---|---|
| Numerical value is "Bakers %" (whole wheat flour is expressed as 100). | |

**(Table 6) Working steps**

| | |
|---|---|
| Mixing | Low rate 3 min → medium rate 3 min |
| After first addition of water in oil-type emulsion composition | Low rate 3 min |
| After second addition of water in oil-type emulsion composition | Low rate 3 min → medium rate 12 min |
| Kneading temperature | 26°C |
| Floor time | 45 minutes |
| Retard temperature | -3°C |
| Retard time | 30 minutes |
| Division weight | 50 g |
| Bench time | 15 minutes |
| Molding method | Briosh molding |
| Proofing time | 60 minutes |
| Proofing | 29°C (Humidity 75%) |
| Baking | Upper flame 200°C Lower flame 180°C 8 to 10 min |

Water in oil-type emulsion composition was divided into two portions and added twice at the mixing step.

### (Comparative Example 3)-Bread products using commercially available margarine-

According to the same manner as that of Example 3 except that all of the water in oil-type fat or oil emulsion composition in the formulation in Table 5 was replaced with a commercially available margarine, conventional Briosh was made. As the margarine, "New Combol 500" (manufactured by Fuji Oil Company Limited) was used.

In Briosh of Comparative Example 3, generation of fungi was begun to be observed three days after baking. On the other hand, in Briosh of Example 3, generation of fungi was begun to be observed after 4 days or more from baking, and the antifungal effect was excellent. In addition, an eating feeling of the latter was softer, better in melting in mouth, and excellent in a taste. The characteristics of these eating feeling and taste were maintained even after storage for several days.

### (Production Example 5)-Oil in water-type fat or oil emulsion with improving agent A-

An oily phase containing 10 parts of purified rapeseed oil and 20 parts of soybean hydrogenated oil (melting point 32°C) was prepared. Then, the oily phase was added to the aqueous phase (60°C) composed of 70 parts of the bread-improving agent A obtained in Production Example 1. The mixture was pre-emulsified, homogenized at 5 MPa, sterilized at 90°C for 30 seconds, and cooled to 35°C to prepare an oil in water-type fat or oil emulsion composition.

### (Example 4)-Bread products using oil in water-type fat or oil emulsion composition with improving agent A-

Using the oil in water-type fat or oil emulsion composition obtained in Production Example 4, loaf bread was made by a straight method in an about 5kg scale according to the formulation of Table 7 and working steps of Table 8. As wheat flour, strong flour "Eagle"

### (manufactured by Nippon Flour Mills Co., Ltd.) was used. As leaven, raw yeast "ORIENTAL YEAST" (manufactured by Oriental Yeast Co., Ltd.) was used. As fat or oil, margarine "NEW COMBOL 500" (manufactured by Fuji Oil Co., Ltd.) was used.

The baked loaf bread was allowed to stand at room temperature (10 to 20°C) overnight in a hygienic environment, sliced into about 2 cm thick, and packed into a bag hygienically. The bag was sealed and stored at 30°C, and a taste and an eating feeling of the loaf bread were assessed and a degree of retrogradation was assessed every day. At the same time, the state of generation of fungi was observed, and the number of bacteria was measured to confirm the preservative property. After the loaf bread was allowed to stand at room temperature overnight after baking, a volume of the loaf bread was measured by a rapeseed substitution method.

**(Table 7) Table of loaf bread formulation**

| Raw material | Blending amount |
|---|---|
| Strong flour | 100 |
| Raw yeast | 2.5 |
| High quality white sugar | 8 |
| Salt | 2 |
| Whole egg (neat) | 5 |
| Margarine | 6 |
| Oil in water-type fat or oil emulsion composition | 20 |
| Water | 48 |

| | |
|---|---|
| Numerical value is "Bakers %" (Whole wheat flour is expressed as 100). | |

**(Table 8) Working steps**

| | |
|---|---|
| Mixing | Low rate 3 min → medium rate 4 min |
| After addition of fat or oil | Low rate 3 min → medium rate |
| | 4 min → low rate 2 min |
| Kneading temperature | 28°C |
| Floor time | 50 min |
| Fermentation chamber | 28°C (Humidity 70%) |
| Fermentation completion temperature | 29°C |
| Division weight | 220 g |
| Bench time | 20 min |
| Proofing time | 50 min |
| Proofing | 38°C (Humidity 70%) |
| Baking | Upper flame 220°C. Lower flame 230°C 40 min |

### (Comparative Example 4)-Bread products using commercially available cream-

According to the same manner as that of Example 4 except that all of the oil in water-type fat or oil emulsion composition in the formulation in Table 7 was replaced with commercially available cream, loaf bread was made. As the cream, "LEGERE 20" (manufactured by Fuji Oil Company Limited) was used.

In the loaf bread in Comparative Example 4, generation of fungi was begun to be observed three days after baking. On the other hand, in the loaf bread in Example 4, generation of fungi was begun to be observed after 4 days or more from baking, and the antifungal effect was excellent. In addition, an eating feeling of the latter was better in cutting with teeth, softness and melting in mouth, a taste was also excellent. The characteristics of these eating feeling and taste were maintained even after storage for several days. A volume after baking was also better.

### (Example 5)-Pizza dough with bread-improving agent A blended therein-

By adding the bread-improving agent A obtained in Production Example 1, pizza dough was prepared by a direct kneading method in an about 5kg scale according to the formulation of Table 9 and working steps of Table 10. As wheat flour, strong flour "Eagle" (manufactured by Nippon Flour Mills Co., Ltd.) and France flour "LISDOL"

### (manufactured by Nisshin Flour Milling Co., Ltd.) were used. As leaven, SAF YEAST was used. As fat or oil, margarine "FUJICULTURE 500" (manufactured by Fuji Oil Company Limited) was used.

Regarding the baked pizza dough, change in an eating feeling with time after baking, and an eating feeling when re-heated after baking were assessed.

In addition, the dough was allowed to stand at room temperature (10 to 20°C) overnight in a hygienic environment, and packed into a bag hygienically. The bag was sealed, and stored at 30°C for 10 days. A taste and an eating feeling of the pizza dough were assessed, and a degree of retrogradation was assessed every day and, at the same time, the situation of generation of fungi was observed, and the number of bacteria was measured to confirm the preservative property. The pizza dough was allowed to stand at room temperature overnight after baking, and a volume of the pizza dough was measured by a rapeseed substitution method.

**(Table 9) Table of pizza dough formulation**

| Raw material | Blending amount |
|---|---|
| Strong flour | 70 |
| France flour | 30 |
| Instant dry yeast | 0.7 |
| High quality white sugar | 1 |
| Salt | 2 |
| Malt | 0.4 |
| Margarine | 5 |
| Bread-improving agent | 20 |
| Water | 50 |

| | |
|---|---|
| Numerical value is "Bakers %" (whole wheat flour is expressed as 100). | |

**(Table 10) Working steps**

| | |
|---|---|
| Mixing | Low rate 2 min → medium rate 3 min |
| After addition of fat or oil | Low rate 2 min → medium rate 2 min → high rate 1 min |
| Kneading temperature | 26°C |
| Floor time | 30 min after 60 min punching |
| Fermentation chamber | 28°C (Humidity 75%) |
| Fermentation completion temperature | 27°C |
| Division weight | 250 g |
| Bench time | 30 min |
| Molding method | One time 6cm passage through molder |
| Proofing time | 50 min |
| Proofing | 35°C (Humidity 75%) |
| Baking | Upper flame 210°C Lower flame 190°C 19 min |

### (Comparative Example 5)-pizza dough without bread-improving agent-

According to the same manner as that of Example 1 except that the bread-improving agent was 0%, and water was 70% in the formulation of Table 9, pizza dough without a bread-modifying agent was made.

Example 5 and Comparative Example 5 were assessed. As a result, as shown in Table 11, in the pizza dough of Example 5 with a bread-improving agent A blended therein, a surface was crispy, an interior was moist, and soft, melting in mouth was very good, and a taste was also excellent as compared with Comparative Example 5, after 45 minutes passed after baking (state where dough is still warm).

In addition, in the pizza dough of Example 5, even after 3 hours passed after baking (state where dough is cooled), the dough was moist, a soft eating feeling, and better melting in mouth were hardly lost, and the effect of preventing deterioration of an eating feeling with time was excellent. On the other hand, the pizza dough of Comparative Example 5 had a hard eating feeling, and a surface became strongly sticky. And, by re-heating the pizza dough of Example 5, a surface became crispy, an interior became moist and soft, and an eating feeling returned to better melting in mouth again. Namely, the effect of restoring an eating feeling by re-heating was excellent.

In addition, the pizza dough of Example 5 had a great volume, was excellent in the retrogradation preventing effect, and was also excellent in the antibacterial effect and the antifungal effect.

**(Table 11) Assessment of eating feeling after pizza dough baking**

| | Comparative Example 5 | Example 5 |
|---|---|---|
| 45 min passage after baking Cutting with teeth | Δ | ⊙ |
| Softness | Δ | ⊙ moist and soft |
| Melting in mouth | Δ | ⊙ |
| Crispy feeling of surface | Δ | ⊙ |
| 3 hours after baking (room temperature) | | |
| Cutting with teeth | × | ○∼⊙ |
| Softness | × Hard | ○∼⊙ |
| Melting in mouth | × | ○-⊙ |
| Crispy feeling of surface | × Sticky | Δ |
| 3 hours after baking (re-heating) | | |
| Cutting with teeth | Δ | ⊙ |
| Softness | Δ | ⊙ moist and soft |
| Melting in mouth | Δ | ⊙ |
| Crispy feeling of surface | Δ | ⊙ |

### Industrial applicability

As detailed hereinabove, by blending the bread-improving agent of the present invention into bread products, in addition to the effect of improving physical properties and a taste of bread products, the highly excellent preservative effect of imparting not only the antibacterial effect but also antifungal effect can be given to bread products.

According to the present invention, excellent physical properties and a taste can be imparted to bread products only by blending a natural improving agent to bread dough without using previous synthetic food additives. Further, their deterioration with age can be reduced, and it becomes possible to produce bread products which can be stored for a long period of time. Therefore, the present invention makes a great contribution to stabilization of quality of bread products during distribution in a market such as convenience stores and supermarkets.

## Claims

1. Use of a bread-improving agent for inhibiting fungal growth in bread, said bread-improver comprising a fermented soybean protein material obtained by fermenting a soybean protein material selected from a group consisting of soybean milk, soybean slurry, soybean protein isolate, soybean protein concentrate and soybean flour with a microorganism belonging to the genus *Bifidobacterium* only, or a mixture thereof with lactic acid bacterium or bacteria, wherein a weight ratio of acetic acid content/lactic acid content in the fermented soybean protein material is not less than 1.

2. Use according to claim 1, wherein the weight ratio of acetic acid content/lactic acid content in the fermented soybean protein material is not less than 1.2.

3. Use according to claim 1 or 2, wherein acetic acid concentration in the fermented soybean protein material is 1 to 20% by weight in the solid content, and lactic acid concentration in the fermented soybean protein material is 1 to 15% by weight in the solid content.

4. Use according to claim 1 or 2, wherein acetic acid concentration is the fermented soybean protein material is 3 to 15% by weight in the solid content, and lactic acid concentration in the fermented soybean protein material is 1 to 10% by weight in the solid content.

5. Use according to claim 1, wherein a soybean solid content in the fermented soybean protein material obtained by fermentation with a microorganism belonging to the genus *Bifidobacterium* is 2 to 15%.

6. Use of a fat or oil emulsified composition for inhibiting fungal growth on bread, said composition comprising the bread-improving agent according to claim 1.

7. Use according to claim 6, wherein the composition is a water in oil-type or an oil in water-type.

## Patentansprüche

1. Verwendung eines Brotverbesserungsmittels zur Inhibition von Pilzwachstum bei Brot, wobei der Brotverbesserer ein fermentiertes Sojabohnen-Proteinmaterial umfasst, erhalten durch Fermentieren eines Sojabohnen-Proteinmaterials, ausgewählt aus einer Gruppe bestehend aus Sojabohnenmilch, Sojabohnenaufschlämmung, Sojaproteinisolat, Sojabohnenproteinkonzentrat und Sojabohnenmehl, mit einem Mikroorganismus, der nur zur Gattung Bifidobacterium gehört, oder einer Mischung davon mit Milchsäurebakterium oder -bakterien, worin ein Gewichtsverhältnis des Essigsäuregehaltes/Milchsäuregehaltes in dem fermentierten Sojabohnenproteinmaterial nicht weniger als 1 ist.

2. Verwendung nach Anspruch 1, worin das Gewichtsverhältnis des Essigsäuregehaltes/Milchsäuregehaltes in dem fermentierten Sojabohnen-Proteinmaterial nicht weniger als 1,2 ist.

3. Verwendung nach Anspruch 1 oder 2, worin die Essigsäurekonzentration im fermentierten Sojabohnen-Proteinmaterial 1 bis 20 Gew.-% als Feststoffgehalt und die Milchsäurekonzentration im fermentierten Sojabohnen-Proteinmaterial 1 bis 15 Gew.-% als Feststoffgehalt ist.

4. Verwendung nach Anspruch 1 oder 2, worin die Essigsäurekonzentration im fermentierten Sojabohnen-Proteinmaterial 3 bis 15 Gew.-% als Feststoffgehalt und die Milchsäurekonzentration im fermentierten Sojabohnen-Proteinmaterial 1 bis 10 Gew.-% als Feststoffgehalt ist.

5. Verwendung nach Anspruch 1, worin ein Sojabohnen-Feststoffgehalt im fermentierten Sojabohnen-Proteinmaterial, erhalten durch Fermentation mit einem Mikroorganismus, der zur Gattung Bifidobacterium gehört, 2 bis 15% ist.

6. Verwendung einer emulgierten Fett- oder Ölzusammensetzung zur Inhibition des Pilzwachstums bei Brot, wobei die Zusammensetzung das Brotverbesserungsmittel gemäß Anspruch 1 umfasst.

7. Verwendung nach Anspruch 6, worin die Zusammensetzung vom Wasser-in-Öl-Typ oder vom Öl-in-Wasser-Typ ist.

## Revendications

1. Utilisation d'un agent améliorant le pain pour inhiber la croissance fongique dans du pain, ledit agent améliorant le pain comprenant un matériau de protéine de soja fermenté obtenu par fermentation d'un matériau de protéine de soja choisi dans un groupe constitué de lait de soja, d'une suspension de soja, d'un isolat de protéine de soja, d'un concentré de protéine de soja et d'une farine de soja avec un micro-organisme appartenant au genre *Bifidobacterium* seulement, ou d'un mélange de ceux-ci avec une bactérie ou des bactéries d'acide lactique, dans laquelle un rapport massique de la teneur en acide acétique/teneur en acide lactique dans le matériau de protéine de soja fermenté n'est pas inférieur à 1.

2. Utilisation selon la revendication 1, dans laquelle le rapport massique de la teneur en acide acétique/teneur en acide lactique dans le matériau de protéine de soja fermenté n'est pas inférieur à 1,2.

3. Utilisation selon la revendication 1 ou 2, dans laquelle la concentration en acide acétique dans le matériau de protéine de soja fermenté est de 1 à 20 % en masse dans la teneur en matière solide, et la concentration en acide lactique dans le matériau de protéine de soja fermenté est de 1 à 15 % en masse dans la teneur en matière solide.

4. Utilisation selon la revendication 1 ou 2, dans laquelle la concentration en acide acétique dans le matériau de protéine de soja fermenté est de 3 à 15 % en masse dans la teneur en matière solide, et la concentration en acide lactique dans le matériau de protéine de soja fermenté est de 1 à 10 % en masse dans la teneur en matière solide.

5. Utilisation selon la revendication 1, dans laquelle la teneur en matière solide de soja dans le matériau de protéine de soja fermenté obtenu par fermentation avec un micro-organisme appartenant au genre *Bifidobacterium* est de 2 à 15 %.

6. Utilisation d'une composition émulsionnée de graisse ou d'huile pour inhiber la croissance fongique sur du pain, ladite composition comprenant l'agent améliorant le pain selon la revendication 1.

7. Utilisation selon la revendication 6, dans laquelle la composition est d'un type eau-dans-huile ou d'un type huile-dans-eau.
